# EUROPÄISCHE PATENTANMELDUNG

(11) **EP 2 801 883 A2**
(43) Veröffentlichungstag der Anmeldung: **12.11.2014**
(21) Anmeldenummer: 14167302.0
(22) Anmeldetag: 07.05.2014
(51) Int. Cl.: G05D 23/12

(54) **Thermostat**

(30) Priorität: 07.05.2013 DE 102013208416
(71) Anmelder: Behr Thermot-tronik GmbH, 70806 Kornwestheim (DE)
(72) Erfinder: Willers, Eike, Dr., 70469 Stuttgart (DE); Klein, Hans-Peter, Dr., 71397 Leutenbach (DE)
(74) Vertreter: Grauel, Andreas

(57) **Zusammenfassung**

Die Erfindung betrifft ein Thermostat mit einem Hohlkörper (2, 58, 65) zur Aufnahme von einem oder mehreren thermosensiblen Medien (3a, 4a), wobei der Hohlkörper im Inneren einen ersten Bereich (3, 54, 63) und einen zweiten Bereich (4, 55, 64) aufweist, welche über ein Trennmittel (7, 20, 30, 40, 53, 61) voneinander getrennt sind, wobei das Trennmittel (7, 20, 30, 40, 53, 61) einen hydraulischen Ausgleich zwischen dem ersten Bereich (3, 54, 63) und dem zweiten Bereich (4, 55, 64) erlaubt, wobei der erste Bereich (3, 54, 63) ein erstes thermosensibles Medium (3a) aufweist und der zweite Bereich (4, 55, 64) ein zweites thermosensibles Medium (4a) aufweist, wobei die Wärmeleitfähigkeit des ersten thermosensiblen Mediums (3a) geringer ist als die Wärmeleitfähigkeit des zweiten thermosensiblen Mediums (4a).

## Beschreibung

### Technisches Gebiet

Die Erfindung betrifft ein Thermostat mit einem Hohlkörper zur Aufnahme von einem oder mehreren thermosensiblen Medien, wobei der Hohlkörper im Inneren einen ersten Bereich und einen zweiten Bereich aufweist, welche über ein Trennmittel voneinander getrennt sind, wobei das Trennmittel einen hydraulischen Ausgleich zwischen dem ersten Bereich und dem zweiten Bereich erlaubt.

### Stand der Technik

Thermostate, welche beispielsweise in Kühlsystemen von Kraftfahrzeugen eingesetzt werden, können Mittel aufweisen, die eine aktive Temperierung eines Dehnstoffelementes erlauben. Auf diese Weise beheizbare Thermostate werden Kennfeldther-mostate genannt. Zur Beheizung können beispielsweise sogenannte PTC-Elemente (Positive-Temperature-Coefficient) eingesetzt werden.

Die Heizelemente können dabei direkt an den Arbeitskolben des Dehnstoffelementes angebracht sein oder als sogenannte Plattenheizer oder Ringheizer vorgesehen sein, welche im oder am Dehnstoffelement angeordnet sind.

Nachteilig an den Lösungen im Stand der Technik ist insbesondere, dass die Beheizung oft durch sehr komplexe Anordnungen realisiert wird. Zum Zwecke der elektrischen Kontaktierung der Heizelemente können Pin-Kontaktierungen durch das Gehäuse des Dehnstoffelementes und/oder des Thermostats geführt werden, was zu einer komplizierten Abdichtung und weiterhin zu einer Anfälligkeit der Pin-Kontaktierungen gegenüber mechanischen Erschütterungen führt. Außerdem werden aufgrund der geringen Ausmaße der Thermostate und insbesondere der Dehnstoffelemente oft sehr filigrane Heizelemente verwendet, welche besonders störanfällig sind. Auch wird die Montage durch solche komplexen Anordnungen verkompliziert und der Preis für ein Thermostat erhöht.

### Darstellung der Erfindung, Aufgabe, Lösung, Vorteile

Es ist die Aufgabe der vorliegenden Erfindung ein Thermostat bereitzustellen, welches eine im Vergleich zu den Lösungen im Stand der Technik verbesserte thermische Ansteuerung des Dehnstoffelementes aufweist.

Die Aufgabe des Thermostats wird durch ein Thermostat mit den Merkmalen des Anspruchs 1 gelöst.

Ein Ausführungsbeispiel der Erfindung betrifft ein Thermostat mit einem Hohlkörper zur Aufnahme von einem oder mehreren thermosensiblen Medien, wobei der Hohlkörper im Inneren einen ersten Bereich und einen zweiten Bereich aufweist, welche über ein Trennmittel voneinander getrennt sind, wobei das Trennmittel einen hydraulischen Ausgleich zwischen dem ersten Bereich und dem zweiten Bereich erlaubt, wobei der erste Bereich ein erstes thermosensibles Medium aufweist und der zweite Bereich ein zweites thermosensibles Medium aufweist, wobei die Wärmeleitfähigkeit des ersten thermosensiblen Mediums geringer ist als die Wärmeleitfähigkeit des zweiten thermosensiblen Mediums.

Der Hohlkörper bildet dabei das Gehäuse des Dehnstoffelementes, also die räumliche Begrenzung für den Dehnstoff. Über eine Ausdehnung des thermosensiblen Mediums kann ein Kolbenelement verschoben werden. Der Hohlkörper kann dabei vorteilhafterweise eine zylindrische Form aufweisen. Um eine Übertragung der durch den Dehnstoff verursachten Kraftkomponente auf ein Kolbenelement besonders vorteilhaft zu ermöglichen, weist der Hohlkörper vorteilhafterweise eine Öffnung auf.

Mit einem thermosensiblen Medium ist hier ein Medium gemeint, welches sich infolge von Temperaturänderungen ausdehnt bzw. zusammenzieht. Dies kann beispielsweise ein Wachs sein, welches bei einem Phasenübergang von einer festen Phase in eine flüssige Phase eine besonders starke Volumenänderung erfährt. Auch andere Medien, die ausreichend große Volumenänderungen bei entsprechender Temperatureinwirkung erfahren, können alternativ vorgesehen werden. Vorteilhafterweise ist die Volumenänderung reversibel, so dass bei einer geeigneten Temperaturveränderung auch der Ausgangszustand wieder erreicht werden kann. Hierzu kann zusätzlich ein Aktuator, wie beispielsweise eine Feder, vorgesehen sein, die beispielsweise auf das Kolbenelement einwirkt und eine Rückkehr in den Ausgangszustand unterstützt.

Die Wärmeleitfähigkeit der beiden thermosensiblen Medien sind vorteilhafterweise voneinander unterschiedlich. Daraus resultiert, dass die Volumenänderung in den beiden thermosensiblen Medien bevorzugt zu unterschiedlichen Zeitpunkten bzw. unterschiedlich stark eintritt.

In einer besonders günstigen Ausgestaltung der Erfindung ist es außerdem vorgesehen, dass der Hohlkörper im Wesentlichen aus einem Material gebildet ist, welches eine Wärmeleitfähigkeit aufweist, die geringer ist als 50 W/mK, dabei vorzugsweise geringer als 25 W/mK.

Durch eine geringe Wärmeleitfähigkeit des Hohlkörpers kann ein Wärmeabtransport vom Hohlkörper und damit von den thermosensible Medien weg verringert werden. Die Wärmeleitfähigkeit von einfachen Stählen liegt dabei regelmäßig in einem Bereich von 40 W/mK bis 50 W/mK. Die Wärmeleitfähigkeit von Edelstählen, welche besonders zu bevorzugen sind, liegt regelmäßig bei Werten von 15 W/mK bis 25 W/mK. Dies ist besonders vorteilhaft, weil dadurch geringere Wärmemengen ausreichen um eine gewünschte Volumenänderung der thermosensiblen Medien hervorzurufen. Der Verlust an Wärme durch ungewollten Abtransport vom Hohlkörper weg wird durch eine möglichst niedrige Wärmeleitfähigkeit des Hohlkörpers minimiert.

Auch ist es zu bevorzugen, wenn der Hohlkörper einen ersten Abschnitt aufweist, welcher eine vom restlichen Hohlkörper abweichende Wärmeleitfähigkeit aufweist, wobei die Wärmeleitfähigkeit des ersten Abschnitts vorzugsweise größer ist als die Wärmeleitfähigkeit des restlichen Hohlkörpers.

Über einen Abschnitt des Hohlkörpers, welcher eine höhere Wärmeleitfähigkeit aufweist, kann der Wärmeübergang von außen in den Hohlkörper hinein verbessert werden. Dies ist insbesondere vorteilhaft, wenn das Heizelement oder ein aufheizendes Fluid außerhalb des Hohlkörpers angeordnet sind.

Der Abschnitt kann dabei beispielsweise durch ein vom restlichen Hohlkörper abweichendes Material gebildet sein. Beispielsweise kann eine Kupfereinlage oder eine Aluminiumeinlage in einem Hohlkörper aus Edelstahl vorgesehen werden.

Weiterhin ist es vorteilhaft, wenn das erste thermosensible Medium durch ein Wachs gebildet ist.

Wachs bietet im Allgemeinen den Vorteil, dass ein Phasenübergang von einer festen Phase in eine flüssige Phase mit einer verhältnismäßig großen Volumenänderung einhergeht. Daher kann bereits mit geringen Wachsmengen ein ausreichend großer Arbeitsweg eines Kolbenelementes realisiert werden.

Weiterhin ist es zu bevorzugen, wenn das zweite thermosensible Medium zumindest teilweise durch ein Wachs gebildet ist, wobei dem zweiten thermosensiblen Medium zumindest ein Zusatzmaterial beigefügt ist, welches die Wärmeleitfähigkeit des zweiten thermosensiblen Mediums erhöht.

Über ein oder mehrere Zusatzmaterialien in einem Wachs, kann die Wärmeleitfähigkeit des Wachses insgesamt erhöht werden.

Auch ist es zweckmäßig, wenn das Zusatzmaterial pulverförmig und/oder faserförmig und/oder schaumförmig ist.

Das Zusatzmaterial kann dabei vorteilhafterweise in einer pulverförmigen Form vorliegen. Insbesondere können hier Metallpulver herangezogen werden. Auch faserförmige Materialien können vorteilhaft verwendet werden. Schaumförmige Materialien, wie insbesondere Metallschaumstrukturen, sind ebenfalls vorteilhaft zu verwenden. Auch andersartig geformte Stoffe können dem Wachs zugesetzt werden. Bei der Auswahl des Zusatzmaterials ist darauf zu achten, dass die Funktionsfähigkeit des Thermostats insgesamt nicht eingeschränkt wird. Das Zusatzmaterial sollte daher beispielsweise keinen besonders starken abrasiven Charakter aufweisen, der zu einer vorzeitigen Schädigung des Thermostats führen könnte. Allen genannten Zusatzmaterialien ist gemein, dass sie die Wärmeleitfähigkeit des Wachses insgesamt erhöhen.

Darüber hinaus ist es zu bevorzugen, wenn das Trennmittel durch eine flexible Membran gebildet ist.

Das Trennmittel, welches die thermosensiblen Medien voneinander trennt, kann vorteilhafterweise als flexible Membran ausgelegt werden. Diese kann vorzugsweise aus einem Elastomer gefertigt sein. Die Membran kann fest im Inneren des Hohlkörpers positioniert werden, wobei sie aufgrund ihrer elastischen Eigenschaften trotzdem einen hydraulischen Ausgleich zwischen dem ersten und dem zweiten thermosensiblen Medium schaffen kann.

Das Trennmittel kann auch aus einer im Wesentlichen formstabilen Einfassung gebildet sein, welche eine Durchtrittsöffnung aufweist, die von einer elastischen Membran verschlossen ist.

Die Membran kann dabei beispielsweise als tellerartiges Element ausgeführt sein. Ebenso kann die Membran mützenförmig ausgebildet sein, wodurch die Wärmübergangsfläche zwischen den beiden thermosensiblen Medien vergrößert werden kann. Der Bereich unterhalb der Membran ragt dann in den Bereich oberhalb der Membran hinein und entlang der gesamten Fläche der mützenförmigen Membran kann ein Wärmeübergang zwischen den Bereichen stattfinden. Die Orientierung der mützenförmigen Membran kann in einer alternativen Ausführung auch umgekehrt sein.

In einer alternativen Ausführungsform der Erfindung kann es vorgesehen sein, dass das Trennmittel durch einen Trennkörper gebildet ist, welcher entlang des Hohlraums des Hohlkörpers beweglich ist und gegenüber den Innenwänden des Hohlkörpers abdichtend wirkt.

Ein solcher Trennkörper kann beispielsweise aus einem formstabilen Material, wie Metall oder Kunststoff, gefertigt sein. Der Trennkörper kann beispielsweise eine tellerartige Form aufweisen oder topfförmig ausgebildet sein. Die aufgestellten Randbereiche eines topfförmigen Trennkörpers können dabei als Führungsmittel dienen, über welche der Trennkörper an den Innenwänden des Hohlkörpers abgestützt ist. Der Trennkörper kann entlang des Hohlraums beweglich gelagert sein.

Alternativ ist auch ein elastischer Trennkörper vorsehbar, der beweglich im Hohlraum des Hohlkörpers gelagert ist.

Weiterhin kann es besonders vorteilhaft sein, wenn der Trennkörper Führungsmittel aufweist, welche eine Position des Trennkörpers relativ zu den Innenwänden des Hohlkörpers definieren.

Über Führungsmittel kann der Trennkörper innerhalb des Hohlkörpers gegenüber den Innenwänden abgestützt sein. Solche Führungsmittel können beispielsweise über vollständig umlaufende oder teilweise umlaufende Rippen gebildet sein, die aus einem elastischen oder formstabilen Material gebildet sind. Ebenso können an dem Trennkörper Einsätze angebracht sein, die eine Führung des Trennkörpers bewirken. Vorteilhafterweise verhindern solche Führungsmittel ein Verkanten des Trennkörpers.

Auch kann es zweckmäßig sein, wenn am Hohlkörper Mittel zur Verminderung eines Wärmeabtransports vom Hohlkörper weg vorgesehen sind.

Über solche Mittel kann ein unerwünschter Wärmeabtransport vom Hohlkörper weg verringert oder vollständig vermieden werden. Diese Mittel können beispielsweise durch Isolationen gebildet sein. Auch kann am Hohlkörper eine Einzahl oder Mehrzahl von Einstichen vorgesehen sein, die einen Wärmeabtransport vermindern.
In einer alternativen Ausgestaltung der Erfindung kann es vorgesehen sein, dass an der Außenfläche des Hohlkörpers ein Heizelement vorgesehen ist.

Ein Heizelement kann beispielsweise durch ein PTC-Element gebildet sein. Dieses kann von außen bestromt werden und so einen Temperatureintrag in den Hohlkörper hinein verursachen. Das Heizelement kann dabei beispielsweise tellerartig ausgeformt sein und an einer Außenfläche des Hohlkörpers angebracht sein. Alternativ kann das Heizelement beispielsweise topfartig ausgeführt sein und auf einen der Endbereiche des Hohlkörpers aufgesteckt sein. Dadurch umfasst das Heizelement den Hohlkörper zumindest teilweise.

Darüber hinaus kann es vorteilhaft sein, wenn das Heizelement an einem Bereich der Außenfläche des Hohlkörpers angeordnet ist, welcher das erste thermosensible Medium und/oder zweite thermosensible Medium zumindest teilweise umgibt.

Vorteilhafterweise ist das Heizelement derart am Hohlkörper positioniert, dass der Wärmeübergang über eine möglichst kurze Strecke zum thermosensiblen Medium hin erfolgen kann. Dies verkürzt die Ansprechdauer des Thermostats insgesamt und führt so zu einer höheren Dynamik des Gesamtsystems.

Ein bevorzugtes Ausführungsbeispiel ist dadurch gekennzeichnet, dass eine Volumenänderung des ersten thermosensiblen Mediums und/oder des zweiten thermosensiblen Mediums auf ein Kolbenelement übertragen wird, wobei das Kolbenelement mit einer Kraftkomponente infolge der Volumenänderung des ersten thermosensiblen Mediums und/oder des zweiten thermosensiblen Mediums beaufschlagt wird.

Vorteilhafterweise weist das Thermostat ein Kolbenelement auf, über welches die aufgrund der Volumenänderung entstehende Kraft auf ein Ventil übertragen werden kann. Dieses Kolbenelement ragt dabei vorteilhafterweise in das erste und/oder das zweite thermosensible Medium hinein, um eine möglichst direkte Übertragung der Kraft auf das Kolbenelement zu erreichen. Dafür kann ein Elastomereinsatz vorgesehen sein, der in das erste und/oder das zweite thermosensible Element hineinragt und eine stoffliche Trennung zwischen dem Kolbenelement und den thermosensiblen Medien erzeugt.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1: eine schematische Schnittansicht eines Dehnstoffelementes, wobei das Dehnstoffelement einen Hohlkörper aufweist, der in seinem Inneren zwei Bereiche aufweist, die jeweils ein thermosensibles Medium aufweisen, wobei die Bereiche durch ein Trennmittel voneinander getrennt sind,
- Fig. 2: eine alternative Ausführungsform eines Dehnstoffelementes in einer Ansicht gemäß Fig. 1, wobei ein von Fig. 1 abweichendes Trennmittel vorgesehen ist,
- Fig. 3: eine weitere alternative Ausführungsform eines Dehnstoffelementes in einer Ansicht gemäß der Fig. 1, wobei einem der thermosensiblen Medien ein Zusatzstoff beigemengt ist und zusätzlich ein Deckelelement gezeigt ist, das das Dehnstoffelement nach oben hin abschließt,
- Fig. 4: eine weitere alternative Ausführungsform eines Dehnstoffelementes gemäß der Fig. 1, wobei dem unteren thermosensiblen Medium ein Zusatzstoff beigemengt ist,
- Fig. 5: eine weitere alternative Ausführungsform eines Dehnstoffelementes gemäß der Fig. 1, wobei das Trennmittel als topfförmiger formstabiler Trennkörper ausgebildet ist, und
- Fig. 6: zwei alternative Ausgestaltungen eines Dehnstoffelementes, wobei jeweils ein Trennmittel vorgesehen ist, welches zwei thermosensible Medien im Inneren des Dehnstoffelementes voneinander trennt.

### Bevorzugte Ausführung der Erfindung

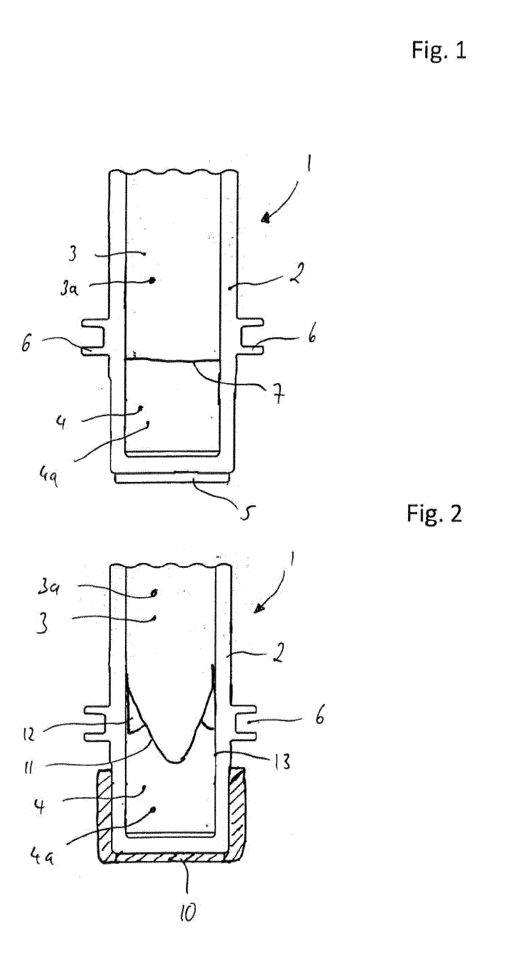

Die Fig. 1 zeigt eine Schnittansicht durch ein Dehnstoffelement 1. Das Dehnstoffelement 1 weist einen Hohlkörper 2 auf. Die Ansicht der Fig. 1 zeigt eine Schnittansicht entlang der Mittelachse des Hohlkörpers 2. Der in Fig. 1 gezeigte Hohlkörper weist eine zylindrische Grundform auf. In alternativen Ausführungen ist auch eine von der zylindrischen Grundform abweichende Formgebung des Hohlkörpers 2 vorsehbar.

Der Hohlkörper 2 weist an seiner Außenwandung zwei sich gegenüberliegende Anbindungspunkte 6 auf. Über diese Anbindungspunkte 6 kann der Hohlkörper 2 an weitere Elemente innerhalb eines Thermostats angebunden werden
Das Innere des Hohlkörpers 2 ist über ein Trennmittel 7 in einen ersten Bereich 3 und einen zweiten Bereich 4 unterteilt. Der zweite Bereich 4 ist dabei unterhalb des ersten Bereichs 3 angeordnet. Das Trennmittel 7 verläuft vollflächig innerhalb des Hohlraums des Hohlkörpers 2. Dadurch ist eine fluiddichte Abtrennung des ersten Bereichs 3 vom zweiten Bereich 4 gewährleistet.

Unterhalb des Hohlkörpers 2 ist ein Heizelement 5 angeordnet. Das Heizelement 5 steht mit einer Außenfläche des Hohlkörpers 2 in thermischem Kontakt. Das Heizelement 5 kann beispielsweise durch ein PTC-Heizelement gebildet sein und ist im Beispiel der Fig. 1 tellerförmig ausgebildet. Über das Heizelement 5 kann ein Wärmeeintrag in den Innenraum des Hohlkörpers 2 erfolgen. Der Wärmeübergang erfolgt dabei vom Heizelement 5 in erster Linie in den zweiten Bereich 4 und durch den zweiten Bereich 4 auch zum ersten Bereich 3.

Der erste Bereich 3 ist in dem in Fig. 1 gezeigten Ausführungsbeispiel mit einem thermosensiblen Medium 3a, wie beispielsweise einem Wachs gefüllt. Der zweite Bereich 4 ist ebenfalls mit einem thermosensiblen Medium 4a gefüllt. Das thermosensible Medium 4a des zweiten Bereichs 4 unterscheidet sich vom thermosensiblen Medium 3a des ersten Bereichs 3 im Wesentlichen dadurch, dass die Wärmeleitfähigkeit im zweiten Bereich 4 größer ist als die im ersten Bereich 3. Außer der Verwendung von Wachs als thermosensibles Mediums 3a, 4a können auch anderweitige Medien verwendet werden. Es sind insbesondere Medien vorzuziehen, die eine möglichst große Volumenänderung infolge einer Temperaturveränderung erzeugen.

Das Trennmittel 7 kann beispielsweise durch eine flexible Membran gebildet sein, so dass ein hydraulischer Ausgleich zwischen dem ersten Bereich 3 und dem zweiten Bereich 4 stattfinden kann. Dieser hydraulische Ausgleich ist insbesondere aufgrund der Volumenänderungen, welche die thermosensiblen Medien 3a, 4a in dem ersten Bereich 3 und dem zweiten Bereich 4 erfahren, notwendig. Das Trennmittel 7 kann in alternativen Ausführungsformen auch auf andere Weise gebildet sein. In den nachfolgenden Figuren werden Alternativen für die Ausführung des Trennmittels 7 näher beschrieben.

Die Fig. 2 zeigt ebenfalls ein Dehnstoffelement 1 mit einem Hohlkörper 2. Der Aufbau des Hohlkörpers 2 stimmt mit dem der Fig. 1 überein und trägt daher dieselben Bezugszeichen wie die Fig. 1.

Im Unterschied zur Fig. 1 ist nun unterhalb des Hohlkörpers 2 ein Heizelement 10 vorgesehen. Das Heizelement 10 ist topfförmig ausgebildet und umfasst den Endbereich des Hohlkörpers 2 zumindest teilweise. Der Hohlkörper 2 ist dabei mit einem seiner Endbereiche in die taschenförmige Aussparung des Heizelementes 10 eingeschoben.

Der Hohlkörper 2 ist ebenfalls durch ein Trennmittel 11 in einen ersten Bereich 3 und einen zweiten Bereich 4 unterteilt. Wie auch bereits in Fig. 1, weisen sowohl der erste Bereich 3 als auch der zweite Bereich 4 thermosensible Medien 3a, 4a auf, wobei das thermosensible Medium 4a des zweiten Bereichs 4 eine höhere Wärmeleitfähigkeit aufweist.

Das Trennmittel 11 ist in Fig. 2 trichterförmig ausgeführt. Es kann entweder fest an den Innenwandungen 13 des Hohlkörpers 2 angebunden sein oder entlang der Innenwände 13 im Hohlkörper 2 beweglich gelagert sein. Vorzugsweise ist das Trennmittel 11 aus einem elastischen Material, wie etwa einer Gummimembran gebildet. Auf diese Weise ist ein hydraulischer Ausgleich zwischen dem ersten Bereich 3 und dem zweiten Bereich 4 gewährleistet.

Im Falle dessen, dass das Trennmittel 11 beweglich entlang der Innenwandungen 13 gelagert ist, kann das Trennmittel 11 auch aus einem formstabilen Material, wie etwa Kunststoff oder einem Metall gebildet sein.

Zwischen dem Trennmittel 11 und den Innenwandungen 13 ist weiterhin ein Führungsmittel 12 angeordnet. Dieses kann beispielsweise aus einem Elastomer oder auch einem formstabilen Werkstoff, wie etwa Kunststoff gebildet sein. Das Führungsmittel 12 dient in erster Linie zur Führung des Trennmittels 11 innerhalb des Hohlkörpers 2. Im Falle eines axial verschiebbaren Trennmittels 11 kann auch das Führungsmittel 12 axial verschiebbar ausgelegt sein. In diesem Fall sollte eine Materialpaarung gewählt werden, die insbesondere auf den Innenwandungen 13 des Hohlkörpers 2 besonders gut gleitet.

Durch das Trennmittel 11 und das Führungsmittel 12 ist der erste Bereich 3 flulddicht vom zweiten Bereich 4 getrennt. Es findet daher keine Vermischung der thermosensiblen Medien 3a, 4a der Bereiche 3, 4 statt.

Im Falle einer flexiblen Ausführung des Trennmittels 11 wird der hydraulische Ausgleich durch eine Ausgleichsbewegung der trichterförmigen Struktur herbeigeführt, wobei das Ausmaß der Bewegung von den Volumenänderungen der thermosensiblen Medien 3a, 4a in den Bereichen 3 und 4 abhängt. Im Falle eines formstabilen Trennmittels 11 wird der hydraulische Ausgleich durch eine Auf- bzw. Abbewegung des Trennmittels 11 zwischen den Bereichen 3 und 4 erreicht.

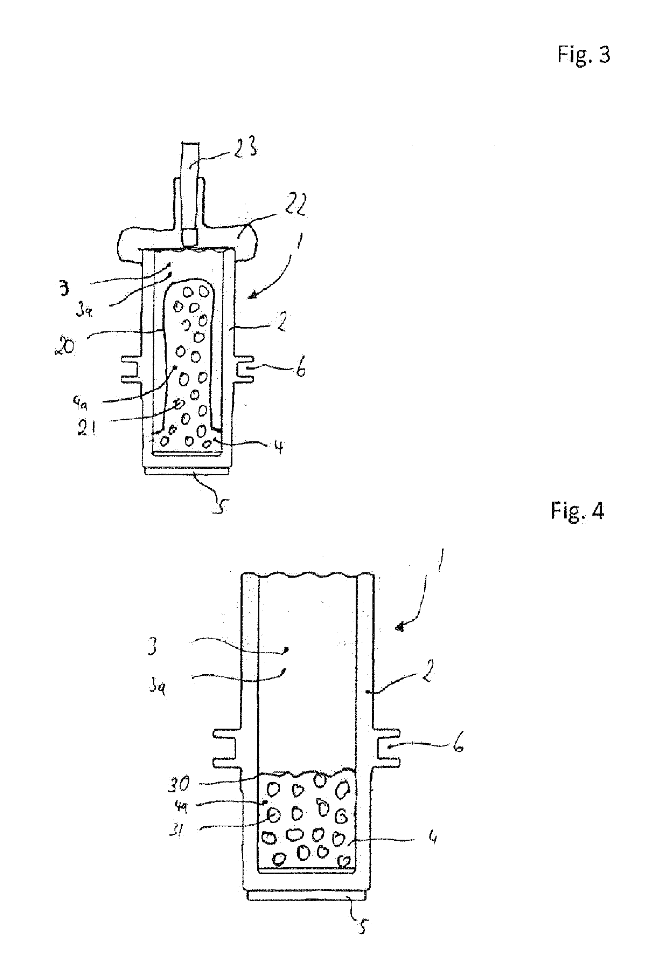

Die Fig. 3 zeigt eine alternative Ausführung des Dehnstoffelementes 1. Der Hohlkörper 2 entspricht den Darstellungen der Fig. 1 und 2 und weist dieselben Bezugszeichen auf.

Das Innere des Hohlkörpers 2 ist durch ein Trennmittel 20 in einen oberen ersten Bereich 3 und einen unteren zweiten Bereich 4 getrennt. Das thermosensible Medium 3a des ersten Bereichs 3 weist ebenfalls einen schlechteren Wärmeleitfähigkeitskoeffizienten auf als das thermosensible Medium 4a des zweiten Bereichs 4. Im Unterschied zu den vorausgegangenen Figuren ist nun im zweiten Bereich 4 ein Zusatzmaterial 21 gezeigt, welches innerhalb des thermosensiblen Mediums 4a des zweiten Bereichs 4 angeordnet ist.

Das Zusatzmaterial 21 kann dabei insbesondere aus pulverförmigen, faserförmigen oder schwammförmigen Materialien, insbesondere mit Metallstrukturen bestehen. Durch das Einbringen des Zusatzmaterials 21 wird die Wärmeleitfähigkeit des thermosensiblen Mediums 4a im zweiten Bereich 4 erhöht. Prinzipiell ist eine beliebige Form für das Zusatzmaterials 21 vorsehbar. Wesentlich ist, dass durch das Einbringen des Zusatzmaterials 21 keine unverhältnismäßige Verschlechterung der Funktionsweise des Dehnstoffelementes 1 erzeugt wird. Es sind daher beispielsweise abrasive Materialien oder Materialien, die auf andere Weise die Integrität des Dehnstoffelementes 1 gefährden, zu vermeiden.

Unterhalb des Hohlkörpers 2 ist wie bereits in Fig. 1 gezeigt ein tellerartiges Heizelement 5 angeordnet.

Das Trennmittel 20 besteht aus einer elastischen Membran und ist mützenartig ausgebildet. Durch diese mützenartige Ausbildung des Trennmittels 20 wird insbesondere die Wärmeübertragungsfläche zwischen den Bereichen 3 und 4 erhöht, indem der zweite Bereich 4 deutlich in den ersten Bereich 3 hineinragt. Der in den ersten Bereich 3 hineinragende Teil des zweiten Bereichs 4 ist vollständig vom thermosensiblen Medium 3a des ersten Bereichs 3 umschlossen.

Das Trennmittel 20 ist innerhalb des Hohlkörpers 2 an den Innenwänden des Hohlkörpers 2 befestigt. In einer alternativen Ausführungsform könnte ebenfalls ein axial im Hohlkörper 2 bewegliches Trennmittel 20 vorgesehen werden.

Im Unterschied zu den vorausgegangenen Figuren ist der erste Bereich 3 des Hohlkörpers 2 nach oben hin durch ein Deckelelement 22 abgeschlossen. Dieses Deckelelement 22 umfasst dabei die Außenwandung des Hohlkörpers 2 zumindest teilweise und begrenzt den ersten Bereich 3 nach oben hin. In das Deckelelement 22 ist ein Kolbenelement 23 eingeschoben. Eine Volumenänderung des ersten Bereichs 3 oder des zweiten Bereichs 4 führt zu einer Bewegung des Kolbenelements 23 axial nach oben oder nach unten.

Eine solche Verschließung des Hohlkörpers 2 ist auch für die anderen Dehnstoffelemente 1 der Fig. 1 und 2 und der nachfolgenden Figuren vorsehbar. Die Gestaltung des Deckelelements 22 der Fig. 3 ist lediglich beispielhaft.

In alternativen Ausführungsformen kann das Kolbenelement beispielsweise weiter in den ersten bzw. den zweiten Bereich hineinragen. Der Elastomereinsatz erfüllt dabei die Funktion das Dehnstoffelement abzudichten und weiterhin auch eine stoffliche Trennung zwischen den thermosensiblen Medien 3a, 4a und dem Kolbenelement 23 herzustellen.

Die Fig. 4 zeigt ein weiteres Dehnstoffelement 1 mit einem Hohlkörper 2. Der erste Bereich 3 ist über ein Trennmittel 30 vom zweiten Bereich 4 getrennt. Das thermosensible Medium 4a des zweiten Bereichs 4 ist mit einem Zusatzmaterial 31 versehen, wodurch die Wärmeleitfähigkeit erhöht wird. An der Unterseite des Hohlkörpers 2 ist ein tellerartiges Heizelement 5 angeordnet, wie es bereits in den Fig. 3 und 1 gezeigt wurde. Das Trennmittel 30 ist in Fig. 4 beispielsweise durch eine elastische Membran dargestellt, welche fest mit den Innenwandungen des Hohlkörpers 2 verbunden ist.

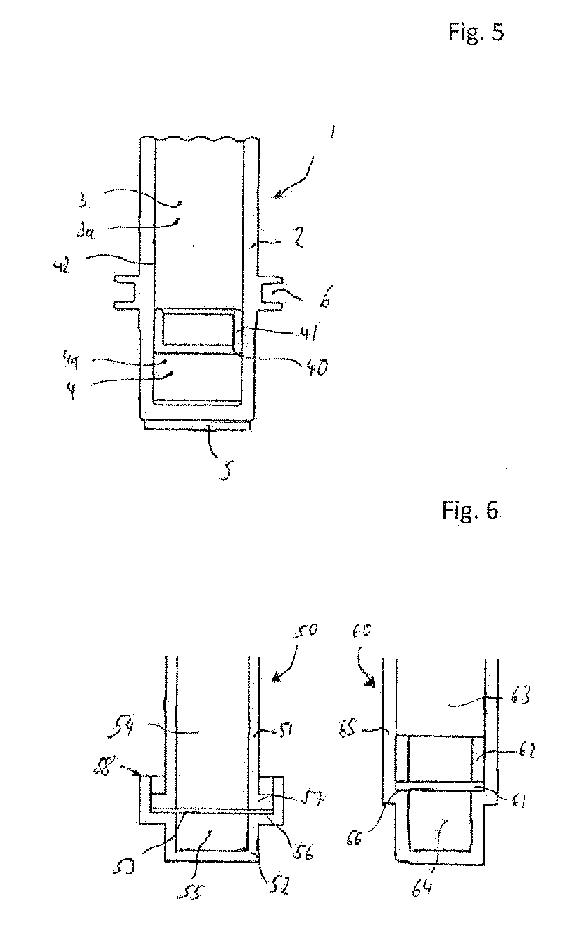

Die Fig. 5 zeigt ein weiteres Dehnstoffelement 1 mit einem Hohlkörper 2. Unterhalb des Hohlkörpers 2 ist ebenfalls ein tellerartiges Heizelement 5 angeordnet. Der Innenraum des Hohlkörpers 2 ist durch ein Trennmittel 40 in den oberen ersten Bereich 3 und den unteren zweiten Bereich 4 unterteilt. Das Trennmittel 40 ist durch einen formstabilen Körper, welcher topfartig ausgeführt ist, gebildet. Der aufgestellte Randbereich 41 des Trennmittels 40 ist dabei an den Innenwandungen 42 des Hohlkörpers 2 abgestützt.

Das Trennmittel 40 kann dabei entweder axial beweglich an den Innenwänden 42 gelagert sein oder an den Innenwänden 42 fixiert sein. Im Falle, dass das Trennmittel 40 an den Innenwänden 42 fixiert ist, kann der Bodenbereich des Trennmittels 40 eine gewisse Elastizität aufweisen, um einen hydraulischen Ausgleich zwischen den Bereichen 3 und 4 zu ermöglichen. Im Falle einer formstabilen Ausführung wird der hydraulische Ausgleich durch eine axiale Auf- bzw. Abbewegung des Trennmittels 40 erreicht.

Die Fig. 6 zeigt zwei alternative Ausgestaltungen eines Dehnstoffelementes 50 bzw. 60. Die Fig. 6 zeigt dabei jeweils Schnittansichten, wobei der Schnitt entlang der jeweiligen Mittelachse des Hohlkörpers verläuft.

Das linke Dehnstoffelement 50 ist aus einem zweiteiligen Hohlkörper 58 gebildet, wobei der obere Teil des Hohlkörpers 58 durch das Gehäuseteil 51 gebildet ist und der untere Teil des Hohlkörpers 58 durch das Gehäuseteil 52. Das untere Gehäuseteil 52 weist dabei einen zylindrischen Bodenbereich auf, welcher parallel zueinander nach oben verlaufende Wandungsbereiche aufweist. Die Wandungen sind jeweils um 90° nach außen abgewinkelt, so dass ein Teil der Wandung parallel zum Bodenbereich des Dehnstoffelementes 50 verläuft. Auf diese Abwinklung folgt eine weitere Abwinklung um 90° nach oben, wodurch die Wandungen wieder parallel zueinander nach oben verlaufen. Auf diese Weise wird ein Absatz 56 ausgeformt, auf welchem das obere Gehäuseteil 51 aufsetzbar ist. Das obere Gehäuseteil 51 weist dazu an seinem unteren Endbereich einen umlaufenden Flanschbereich 57 auf, welcher passgenau in den Absatz 56 des unteren Gehäuseteils 52 einsetzbar ist.

Zwischen dem oberen Gehäuseteil 51 und dem unteren Gehäuseteil 52 ist ein Trennmittel 53 positioniert. Über dieses Trennmittel 53 wird das Dehnstoffelement 50 in einen oberen Bereich 54 und einen unteren Bereich 55 unterteilt.

Das Trennmittel 53 ist dabei zwischen dem Gehäuseoberteil 51 und dem Gehäuseunterteil 52 fixiert und kann keine axiale Bewegung innerhalb des so definierten Hohlkörpers 58 ausführen. Das Trennmittel 53 ist daher vorteilhafterweise aus einem elastischen Material geformt, derart, dass ein hydraulischer Ausgleich zwischen den Bereichen 54, 55 möglich ist.

Der rechte Teil der Fig. 6 zeigt ein alternatives Dehnstoffelement 60, welches einen Hohlkörper 65 aufweist. Der Hohlkörper 65 weist dabei im oberen Bereich parallel bzw. annähernd parallel zueinander verlaufende Wandungen auf, welche einen Absatz 66 bilden. Unterhalb des Absatzes 66 verlaufen die Wandungen wieder parallel bzw. annähernd parallel zueinander. Der Innendurchmesser des Bereichs unterhalb des Absatzes 66 ist geringer als der Innendurchmesser des Bereichs oberhalb des Absatzes 66.

Ein Trennmittel 61 ist im Inneren des Hohlkörpers 65 auf den Absatz 66 aufgelegt. Das Trennmittel 61 ist durch einen Pressring 62, welcher von oben in den Hohlkörper 65 eingepresst ist, auf dem Absatz 66 des Hohlkörpers 65 fixiert. Durch den Pressring 62 ist eine axiale Bewegung des Trennmittels 61 unterbunden. Das Trennmittel 61 ist optimaler Weise durch ein elastisches Material ausgebildet, um einen hydraulischen Ausgleich zwischen dem oberen Bereich 63 und dem unteren Bereich 64 ermöglichen zu können.

Sowohl das Dehnstoffelement 50 als auch das Dehnstoffelement 60 zeigen in der Fig. 6 kein gesondertes Heizelement. Es kann in alternativen Gestaltungen ein Heizelement wie in den vorausgegangenen Fig. 1 bis 5 vorgesehen werden.

Alle in den Fig. 1 bis 6 gezeigten Ausführungsbeispiele des Dehnstoffelementes bzw. der Trennmittel sind beispielhaft und dienen zur Beschreibung des Erfindungsgedankens. Sie besitzen keinen beschränkenden Charakter. Die Ausführungsbeispiele sind untereinander kombinierbar.

## Patentansprüche

1. Thermostat mit einem Hohlkörper (2, 58, 65) zur Aufnahme von einem oder mehreren thermosensiblen Medien (3a, 4a), wobei der Hohlkörper (2, 58, 65) im Inneren einen ersten Bereich (3, 54, 63) und einen zweiten Bereich (4, 55, 64) aufweist, welche über ein Trennmittel (7, 20, 30, 40, 53, 61) voneinander getrennt sind, wobei das Trennmittel (7, 20, 30, 40, 53, 61) einen hydraulischen Ausgleich zwischen dem ersten Bereich (3, 54, 63) und dem zweiten Bereich (4, 55, 64) erlaubt, **dadurch gekennzeichnet, dass** der erste Bereich (3, 54, 63) ein erstes thermosensibles Medium (3a) aufweist und der zweite Bereich (4, 55, 64) ein zweites thermosensibles Medium (4a) aufweist, wobei die Wärmeleitfähigkeit des ersten thermosensiblen Mediums (3a) geringer ist als die Wärmeleitfähigkeit des zweiten thermosensiblen Mediums (4a).

2. Thermostat nach Anspruch 1, **dadurch gekennzeichnet, dass** der Hohlkörper (2, 58, 65) im Wesentlichen aus einem Material gebildet ist, welches eine Wärmeleitfähigkeit aufweist, die geringer ist als 50 W/mK, dabei vorzugsweise geringer als 25 W/mK.

3. Thermostat nach einem der vorhergehenden Ansprüche, **dadurch gekennzeichnet, dass** der Hohlkörper (2, 58, 65) einen ersten Abschnitt aufweist, welcher eine vom restlichen Hohlkörper (2, 58, 65) abweichende Wärmeleitfähigkeit aufweist, wobei die Wärmeleitfähigkeit des ersten Abschnitts vorzugsweise größer ist als die Wärmeleitfähigkeit des restlichen Hohlkörpers (2, 58, 65).

4. Thermostat nach einem der vorhergehenden Ansprüche, **dadurch gekennzeichnet, dass** das erste thermosensible Medium (3a) durch ein Wachs gebildet ist.

5. Thermostat nach einem der vorhergehenden Ansprüche, **dadurch gekennzeichnet, dass** das zweite thermosensible Medium (4a) zumindest teilweise durch ein Wachs gebildet ist, wobei dem zweiten thermosensiblen Medium (4a) zumindest ein Zusatzmaterial (21, 31) beigefügt ist, welches die Wärmeleitfähigkeit des zweiten thermosensiblen Mediums (4a) erhöht.

6. Thermostat nach einem der vorhergehenden Ansprüche, **dadurch gekennzeichnet, dass** das Zusatzmaterial (21, 31) pulverförmig und/oder faserförmig und/oder schaumförmig ist.

7. Thermostat nach einem der vorhergehenden Ansprüche, **dadurch gekennzeichnet, dass** das Trennmittel (7, 11, 20, 30, 53, 61) durch eine flexible Membran gebildet ist.

8. Thermostat nach einem der vorhergehenden Ansprüche, **dadurch gekennzeichnet, dass** das Trennmittel (11, 40) durch einen Trennkörper (11, 40) gebildet ist, welcher entlang des Hohlraums des Hohlkörpers (2) beweglich ist und gegenüber den Innenwänden (13, 40) des Hohlkörpers (2) abdichtend wirkt.

9. Thermostat nach Anspruch 8, **dadurch gekennzeichnet, dass** der Trennkörper (11, 40) Führungsmittel (12, 41) aufweist, welche eine Position des Trennkörpers (11, 40) relativ zu den Innenwänden (13, 42) des Hohlkörpers (2) definieren.

10. Thermostat nach einem der vorhergehenden Ansprüche, **dadurch gekennzeichnet, dass** am Hohlkörper (2, 58, 65) Mittel zur Verminderung eines Wärmeabtransports vom Hohlkörper (2, 58, 65) weg vorgesehen sind.

11. Thermostat nach einem der vorhergehenden Ansprüche, **dadurch gekennzeichnet, dass** an der Außenfläche des Hohlkörpers (2) ein Heizelement (5, 10) vorgesehen ist.

12. Thermostat nach einem der vorhergehenden Ansprüche, **dadurch gekennzeichnet, dass** eine Volumenänderung des ersten thermosensiblen Mediums (3a) und/oder des zweiten thermosensiblen Mediums (4a) auf ein Kolbenelement (23) übertragen wird, wobei das Kolbenelement (23) mit einer Kraftkomponente infolge der Volumenänderung des ersten thermosensiblen Mediums (3a) und/oder des zweiten thermosensible Mediums (4a) beaufschlagt wird.
